# EUROPEAN PATENT APPLICATION

(11) **EP 1 633 012 A2**
(43) Date of publication of application: **08.03.2006**
(21) Application number: 05016898.8
(22) Date of filing: 03.08.2005
(51) Int. Cl.: H01M 8/10, B01D 71/54, B01D 71/44, C08J 5/22, H01B 1/12

(54) **Polymer electrolyte membrane and polymer electrolyte fuel cell**

(30) Priority: 06.08.2004 JP 2004231592
(71) Applicant: CANON KABUSHIKI KAISHA, Ohta-ku, Tokyo (JP)
(72) Inventor: Kobayashi, Motokazu, Ohta-ku, Tokyo (JP); Eritate, Shinji, Ohta-ku, Tokyo (JP); Kanzaki, Yoshio, Sango-cho Ikoma-gun Nara-ken (JP); Ito, Iko, Sango-cho Ikoma-gun Nara-ken (JP)
(74) Representative: TBK-Patent

(57) **Abstract**

A polymer electrolyte membrane is provided which comprises a copolymer prepared by polymerization of a phosphorus-atom-containing unsaturated monomer comprising at least one phosphorus atom and at least one ethylenically unsaturated bond in a molecule, typically represented by the general formula (1): 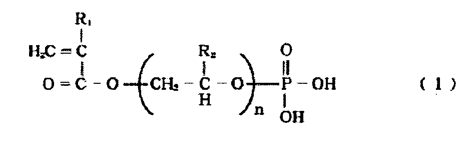 and a monomer or prepolymer of a number-average molecular weight of 2,000 or more having an ethylenically unsaturated bond. Thereby, there are provided a polymer electrolyte membrane having both the high proton conductivity of the polymer electrolyte membrane containing phosphoric acid ester and a high mechanical strength, and a polymer electrolyte fuel cell using the polymer electrolyte membrane.

## Description

### BACKGROUND OF THE INVENTION

### Field of the Invention

The present invention relates to a polymer electrolyte membrane and a polymer electrolyte fuel cell (or proton exchange membrane fuel cell) using the same. The present invention more specifically relates to a polymer electrolyte fuel cell which uses hydrogen, reformed hydrogen, methanol, dimethyl ether, or the like as a fuel, and air or oxygen as an oxidizer.

### Related Background Art

A polymer electrolyte fuel cell has a layered structure in which a polymer electrolyte membrane is held between a fuel electrode (anode) and an air electrode (cathode). The fuel electrode and the air electrode are each composed of a mixture of: a catalyst having a noble metal such as platinum or an organometallic complex carried on conductive carbon; an electrolyte; and a binder.

A fuel supplied to the fuel electrode passes through fine pores of the electrode, reaches the catalyst, and releases electrons by the action of the catalyst to become hydrogen ions. The hydrogen ions pass through the electrolyte membrane provided between the electrodes, reach the air electrode, and react with oxygen supplied to the air electrode and electrons flowing from an external circuit into the air electrode, to thereby produce water. The electrons released from the fuel pass through the catalyst and the conductive carbon carrying the catalyst in the electrode, are guided to the external circuit, and flow into the air electrode from the external circuit. As a result, in the external circuit, the electrons flow from the fuel electrode to the air electrode so that an electric power is taken out.

In other words, when hydrogen is used as a fuel, for example, a reaction represented by the following reaction formula (1) occurs in the fuel electrode. In addition, a reaction represented by the following reaction formula (2) occurs in the air electrode.

Fuel electrode: H₂ → 2H⁺ + 2e⁻ (1)

Air electrode: 1/2O₂ + 2H⁺ + 2e⁻ → H₂O (2)

The conductive carbon, which is a carrier for the catalyst, serves as a conductor of the electrons in the above reactions, and the polymer electrolyte serves as a conductor of the hydrogen ions. Thus, at an interface between the electrode and the polymer electrolyte, the conductive carbon and the polymer electrolyte each must be formed in a network structure, to thereby allow smooth conduction of the electrons and the hydrogen ions, respectively.

In general, a typical electrolyte membrane is a perfluorosulfonic acid membrane known by a trade name of Nafion (registered trademark, available from DuPont).

The perfluorosulfonic acid membrane is a copolymer of perfluorovinylether having a sulfonic acid group as an ion exchange group, and tetrafluoroethylene, and is widely used as an electrolyte membrane for a polymer electrolyte fuel cell.

Recently, there has been proposed a polymer electrolyte membrane composed of an acrylic acid derivative containing phosphoric acid ester as an ion exchange group.

The polymer electrolyte membrane containing phosphoric acid is known to have higher water retention capability at high temperatures than that of a Nafion membrane containing sulfonic acid and to exhibit high proton conductivity. Further, in the polymer electrolyte membrane, a three-dimensional structure is formed between polymer chains by crosslinking between phosphoric acid groups, to thereby develop resistance to water and methanol, and good crossover reducing characteristics.

However, the electrolyte membrane containing phosphoric acid has a low mechanical strength and is brittle, and thus is hardly incorporated as such into a fuel cell.

Thus, there is proposed a copolymer of an acrylic acid monomer containing phosphoric acid ester, and a monomer having a high mechanical strength (see Extended Abstracts of Annual Meeting of The Society of Polymer Science, Japan, Vol. 48, No. 10, p. 2393 (1999)).

Further, there is proposed a method of preparing a polymer electrolyte membrane by inserting an acrylic acid monomer containing phosphoric acid ester into pores of a porous membrane made of a polyolefin resin, a fluorine resin, or the like as a reinforcing material, and polymerizing the monomer (see Japanese Patent Application Laid-Open No. 2002-83514).

However, the mechanical strength of the above-mentioned copolymer of an acrylic acid monomer containing phosphoric acid ester and a monomer having a high mechanical strength is not yet sufficient. When the content ratio of the acrylic acid monomer containing phosphoric acid ester is decreased to thereby increase the content ratio of the monomer having a high mechanical strength, the mechanical strength of the copolymer certainly increases. However, the proton conductivity of the copolymer decreases, to thereby degrade functions as a polymer membrane.

Further, with the method disclosed in Japanese Patent Application Laid-Open No. 2002-83514, although the mechanical strength of the polymer electrolyte membrane increases, the proton conductivity is proportional to the porosity of the reinforcing material, so that the method involves a problem in that a membrane with good proton conductivity will have a lower mechanical strength.

### SUMMARY OF THE INVENTION

The present invention has been accomplished to solve the above-mentioned problems of the prior art, and it is, therefore, an object of the present invention to provide a polymer electrolyte membrane having both the high proton conductivity of the polymer electrolyte membrane containing phosphoric acid ester and a high mechanical strength; and a polymer electrolyte fuel cell using the same.

That is, according to one aspect of the present invention, there is provided a polymer electrolyte membrane comprising a copolymer prepared by polymerization of a phosphorus-atom-containing unsaturated monomer comprising at least one phosphorus atom and at least one ethylenically unsaturated bond in a molecule, and a monomer or prepolymer of a number-average molecular weight of 2,000 or more having an ethylenically unsaturated bond.

In the present invention, it is preferred that the phosphorus-atom-containing unsaturated monomer comprising at least one phosphorus atom and at least one ethylenically unsaturated bond in a molecule is a compound represented by the general formula (1): 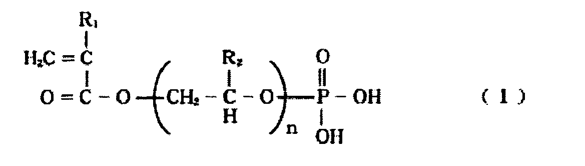
wherein R₁ represents a hydrogen atom or an alkyl group; R₂ represents a hydrogen atom or a substituted or unsubstituted alkyl group; and n represents an integer of 1 to 6.

Further, in the present invention, it is also preferred that the phosphorus-atom-containing unsaturated monomer comprising at least one phosphorus atom and at least one ethylenically unsaturated bond in a molecule is a compound represented by the general formula (2): 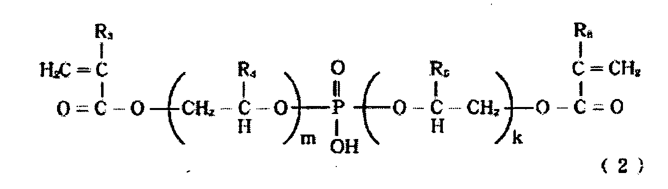
wherein R₃, R₄, R₅ and R₆ each independently represent a hydrogen atom or a substituted or unsubstituted alkyl group; and m and k each independently represent an integer of 1 to 6.

According to another aspect of the present invention, there is provided a polymer electrolyte membrane prepared by polymerization of a monomer of a molecular weight of 2,000 or more comprising an acrylate moiety, an isocyanate moiety and a polyol moiety, and an unsaturated monomer having at least one ethylenically unsaturated bond and at least one sulfonic acid group, phosphoric acid group, or phosphonic acid group in a molecule.

According to still another aspect of the present invention, there is provided a polymer electrolyte membrane comprising a polymer having a urethane bond and a polyol moiety in a main chain and a sulfonic acid group, phosphoric acid group, or phosphonic acid group in a side chain.

The above-described polymer electrolyte membrane is suitably used as a polymer electrolyte membrane for a fuel cell.

In addition, according to yet another aspect of the present invention, there is provided a polymer electrolyte fuel cell using the above-mentioned polymer electrolyte membrane.

### BRIEF DESCRIPTION OF THE DRAWINGS

FIG. 1 is a partial schematic view showing an example of a polymer electrolyte fuel cell in accordance with the present invention; and
FIG. 2 is a partial schematic view showing the structure of a polymer constituting a polymer electrolyte membrane in accordance with the present invention.

### DESCRIPTION OF THE PREFERRED EMBODIMENTS

According to a preferred embodiment of the present invention, by using a polymer electrolyte membrane comprising a copolymer prepared by polymerization of a phosphorus-atom-containing unsaturated monomer comprising at least one phosphorus atom and at least one ethylenically unsaturated bond in a molecule, and a monomer or prepolymer of a number-average molecular weight of 2,000 or more having an ethylenically unsaturated bond, it is possible to provide a polymer electrolyte membrane having both a good proton conductivity and a high mechanical strength.

According to another preferred embodiment of the present invention, the above-described polymer electrolyte membrane is used for a polymer electrolyte fuel cell, to thereby provide a polymer electrolyte fuel cell having high output characteristics and good durability.

Hereinafter, the present invention will be described in more detail.

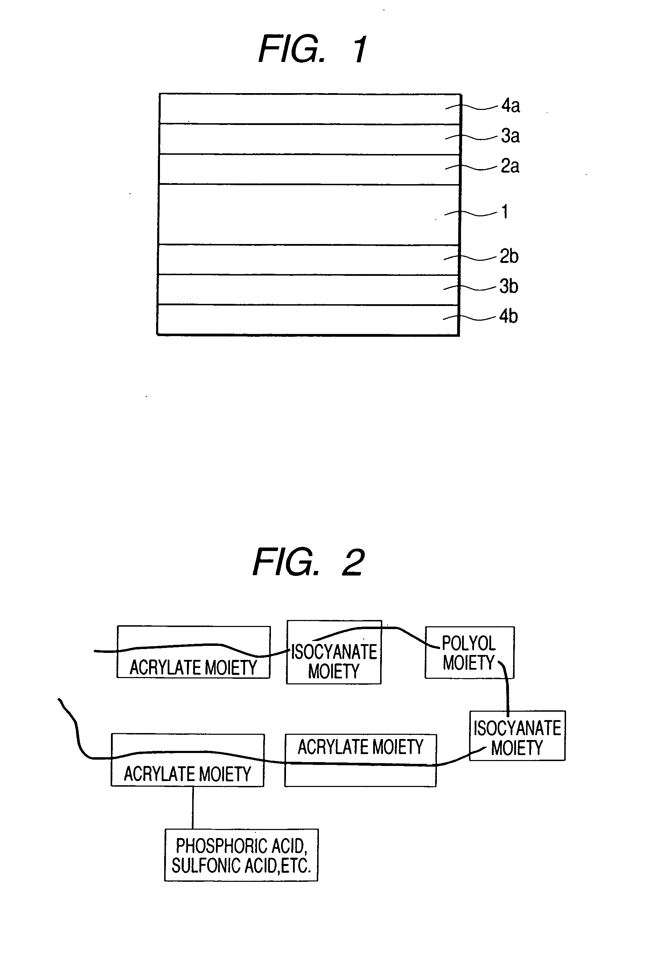

FIG. 1 is a partial schematic vies showing an example of the polymer electrolyte fuel cell in accordance with the present invention.

In FIG. 1, the fuel cell of the present invention is provided with a polymer electrolyte membrane 1; electrode catalyst layers 2a and 2b on both sides of the polymer electrolyte membrane 1; diffusion layers 3a and 3b on outer sides of the electrode catalyst layers 2a and 2b; and electrodes (fuel electrode and oxidizer electrode) 4a and 4b also serving as current collectors on outer sides of the diffusion layers 3a and 3b.

A preferable example of the polymer electrolyte membrane 1 of the present invention is a polymer electrolyte membrane prepared by polymerization of a monomer of a molecular weight of 2,000 or more comprising an acrylate moiety, an isocyanate moiety and a polyol moiety, and an unsaturated monomer having at least one ethylenically unsaturated bond and at least one sulfonic acid group, phosphoric acid group, or phosphonic acid group in a molecule. Another preferable example of the polymer electrolyte membrane 1 of the present invention is a polymer electrolyte membrane comprising a copolymer prepared by polymerization of a phosphorus-atom-containing unsaturated monomer, as an essential component, comprising at least one phosphorus atom and at least one ethylenically unsaturated bond in a molecule, and a monomer or prepolymer of a number-average molecular weight of 2,000 or more having an ethylenically unsaturated bond described below.

It is preferred that the phosphorus atom is bonded to a main chain or side chain of the copolymer as a functional group of a phosphoric acid group, a phosphonic acid group, or a sulfonic acid group, to thereby provide proton conductivity. Specific examples of a compound containing such phosphorus atom include vinylphosphonic acid and allylphosphonic acid. Further examples thereof include vinylsulfonic acid and allylsulfonic acid.

Further, particularly preferable examples of a compound having a phosphoric acid group include compounds represented by the general formula (1): 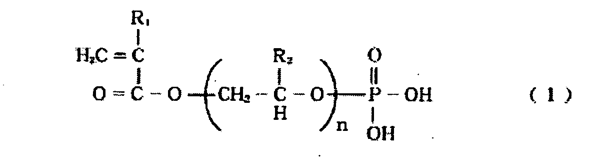
wherein R₁ represents a hydrogen atom or an alkyl group; R₂ represents a hydrogen atom or a substituted or unsubstituted alkyl group; and n represents an integer of 1 to 6, and by the general formula (2): 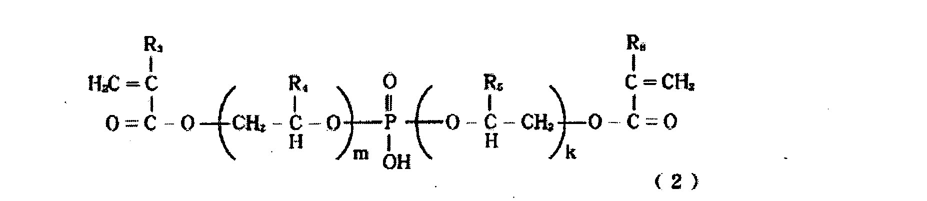
wherein R₃, R₄, R₅ and R₆ each independently represent a hydrogen atom or a substituted or unsubstituted alkyl group; and m and k each independently represent an integer of 1 to 6.

Specific examples of the monomer represented by the general formula (1) include methacryloyloxyethyl acid phosphate; methacryloyltetra(oxyethylene) acid phosphate; methacryloylpenta(oxypropylene) acid phosphate; 4-styrylmethoxybutyl acid phosphate; acryloyloxyethyl acid phosphate; and acryloyltetra(oxyethylene) acid phosphate.

Specific examples of the monomer represented by the general formula (2) include bismethacryloyloxyethyl acid phosphate; and bisacryloyloxyethyl acid phosphate.

The monomer or prepolymer of a number-average molecular weight of 2,000 or more having an ethylenically unsaturated bond (hereinafter, simply referred to as "monomer having an ethylenically unsaturated bond") is a compound which can be copolymerized with the above-described phosphorus-atom-containing unsaturated monomer. Specific examples thereof include prepolymers of polyester (meth)acrylate, urethane (meth)acrylate, polyether (meth)acrylate, and epoxy (meth)acrylate; which may be used singularly or in combination. Of those, urethane (meth)acrylate is particularly preferable. The term "urethane (meth)acrylate" herein employed refers to a compound having one or more (meth)acrylate moieties, isocyanate moieties, and polyols in a molecule. Specifically, for the isocyanate moiety, there can be used tolylene diisocyanate, diphenylmethane diisocyanate, hexamethylene diisocyanate, and isophorone diisocyanate. For the polyol moiety, specifically, polyester and polyether can be used. Incidentally, the term "number-average molecular weight" as herein employed refers to a value of number-average molecular weight determined by GPC measurement.

Still another preferable example of the polymer electrolyte membrane 1 of the present invention is a polymer electrolyte membrane comprising a polymer having a urethane bond and a polyol moiety in a main chain and a sulfonic acid group, phosphoric acid group, or phosphonic acid group in a side chain. As shown in FIG. 2, this polymer may have, for example, a structure in which a main chain comprised of an acrylate moiety, a polyol moiety and an isocyanate moiety has a side chain having phosphoric acid, sulfonic acid, and the like bonded thereto. Incidentally, in FIG. 2, the main chain is depicted with some parts being omitted for convenience of presentation.

The physical properties of the obtained polymer electrolyte membrane such as glass transition temperature, flexibility, and mechanical strength vary depending on the number-average molecular weight of the monomer having an ethylenically unsaturated bond. When the number-average molecular weight is not less than 2,000, preferably not less than 3,000 but no more than 10,000, sufficient mechanical strength for use in a fuel cell can be obtained. A number-average molecular weight less than 2,000 does not provide sufficient mechanical strength and flexibility and is not preferable.

Further, in order to attain sufficient mechanical strength, it is preferred that the number of ethylenically unsaturated bonds in one molecule of the monomer of a number-average molecular weight of 2,000 or more containing ethylenically unsaturated bond is 2 or more.

A preferable copolymer is prepared by polymerizing 3 to 40 parts by weight, preferably 5 to 30 parts by weight of the monomer of a number-average molecular weight of 2,000 or more containing ethylenically unsaturated bond, with 100 parts by weight of the phosphorus-atom-containing unsaturated monomer containing at least one phosphorus atom and at least one ethylenically unsaturated bond in a molecule. When the monomer of a number-average molecular weight of 2,000 or more containing ethylenically unsaturated bond is less than 3 parts by weight, sufficient mechanical strength may not be obtained, while when' it is more than 40 parts by weight, sufficient mechanical strength may be obtained but sufficient proton conductivity may not be obtained.

According to a preferable example of the present invention, the polymer electrolyte membrane may be obtained by mixing a phosphorus-atom-containing unsaturated monomer comprising at least one phosphorus atom and at least one ethylenically unsaturated bond in a molecule with a monomer of a number-average molecular weight of 2,000 or more having ethylenically unsaturated bond to prepare a polymerizable solution; forming a film; and polymerizing the monomer by a hitherto known suitable method such as solution polymerization, heat polymerization, photopolymerization, electron beam polymerization, or the like.

The film formation may also be performed through a hitherto known suitable film formation method such as application, dip coating, doctor blading, or the like.

The thickness of the polymer electrolyte membrane may suitably be determined depending on the proton conductivity, the mechanical strength, and a fuel cell structure adopted, but is preferably within the range of about 10 µm to 200 µm. A thickness of less than 10 µm will lower the mechanical strength, which may degrade the durability, while a thickness of more than 200 µm will reduce the proton conductivity, which may degrade the fuel cell performance.

To the polymerizable solution, there may be added a photopolymerization initiator, a solvent, a surfactant, filler particles, or the like as needed.

The electrode catalyst layers 2a, 2b are each composed of an electrode catalyst having at least a platinum catalyst carried on conductive carbon.

It is preferable that the average particle size of the carried catalyst is small. Specifically, the average particle size of the carried catalyst is preferably within the range of 0.5 nm to 20 nm, more preferably 1 nm to 10 nm. When the average particle size is less than 0.5 nm, the catalyst particles themselves have excessive activity, so that the handling of the catalyst becomes difficult. When the average particle size is more than 20 nm, the surface area of the catalyst is reduced to decrease reaction sites, so that the activity may be lowered.

Instead of the platinum catalyst, platinum group metals such as rhodium, ruthenium, iridium, palladium, and osmium may be used, or an alloy of platinum and these metals may also be used. In particular, when methanol is used as a fuel, an alloy of platinum and ruthenium is preferably used.

The conductive carbon that can be used in the present invention can be selected from carbon black, carbon fiber, graphite, carbon nanotube, and the like.

Further, the conductive carbon has an average particle size preferably within the range of 5 nm to 1,000 nm, more preferably within the range of 10 nm to 100 nm. In actual use, however, since aggregation of conductive carbon occurs to some degree, the particle size distribution will become wide from 20 nm to 1,000 nm or more. Further, in order to carry the above-described catalyst, the conductive carbon preferably has a relatively large BET specific surface area, that is, 50 m²/g to 3,000 m²/g, more preferably 100 m²/g to 2,000 m²/g.

As a method of carrying a catalyst on a surface of conductive carbon, known methods can widely be used. For example, a method disclosed in Japanese Patent Application Laid-Open Nos. H02-111440, 2000-003712, or the like involves impregnating conductive carbon with a solution of platinum and other noble metals and then reducing the noble metal ions to be carried on the surface of the conductive carbon. Further, a noble metal to be carried may be used as a target and carried on conductive carbon through a vacuum film formation method such as sputtering.

The thus-prepared electrode catalyst is bonded to the polymer electrolyte membrane and diffusion layers described below, as such or after mixing with a binder, a polymer electrolyte, a water repellant, conductive carbon, a solvent, or the like.

The diffusion layers 3a and 3b are provided to allow efficient and uniform introduction of hydrogen, reformed hydrogen, methanol, or dimethyl ether as a fuel, and air or oxygen as an oxidizer, into the electrode catalyst layers and to be in contact with the electrodes for transferring electrons. In general, the diffusion layers 3a and 3b are each preferably a conductive porous film, and carbon paper, carbon cloth, a composite sheet of carbon and polytetrafluoroethylene, or the like is used therefor.

The surface and inside of each of the diffusion layers 3a and 3b may be coated with a fluoro paint to provide water repellency.

The types of the electrodes 4a, 4b are not limited and any conventional electrode may be used without limitation as long as it is one that can efficiently supply a fuel or oxidizer to the diffusion layers and transfer electrons to or from the diffusion layers.

The fuel cell in accordance with the present invention is produced by stacking the polymer electrolyte membrane, the electrode catalyst layers, the diffusion layers, and the electrodes as shown in FIG. 1. However, there is no limitation to the shapes of the fuel cells and any conventional production method may be used without limitation.

### EXAMPLES

Hereinafter, the present invention will be described in more detail with reference to examples. However, the present invention is not limited to the following examples.

Production examples of the polymer electrolyte membrane are described below.

### (Example 1)

30 g of methacryloyloxyethyl acid phosphate (Phosmer M (trade name); available from Uni-Chemical Co., Ltd.) and 5 g of a urethane acrylate prepolymer (UF-503LN (trade name); number-average molecular weight: 4,900; available from KYOEISHA CHEMICAL Co., LTD.) were sufficiently mixed to thereby prepare a polymerizable solution.

The polymerizable solution was applied onto a surface of a Teflon (registered trademark) sheet in a thickness of 50 µm. Then, electron beam irradiation was effected using an electron beam irradiation system (CB250/15/180L (trade name); manufactured by IWASAKI ELECTRIC CO., LTD.) under the conditions of an accelerating voltage of 180 kV and a dose of 50 kGy. Then, the Teflon (registered trademark) sheet was peeled off to thereby obtain a polymer electrolyte membrane.

### (Example 2)

20 g of bisacryloyloxyethyl acid phosphate (Light Acrylate P-2A (trade name); available from KYOEISHA CHEMICAL Co., LTD.), 10 g of acryloyloxyethyl acid phosphate (Light Acrylate P-1A (trade name); available from KYOEISHA CHEMICAL Co., LTD.), and 3 g of a urethane acrylate prepolymer (UF-8001(trade name); number-average molecular weight: 3,200; available from KYOEISHA CHEMICAL Co., LTD.) were sufficiently mixed to thereby prepare a polymerizable solution.

The polymerizable solution was applied onto a surface of a Teflon (registered trademark) sheet in a thickness of 50 µm. Then, electron beam irradiation was effected using an electron beam irradiation system (CB250/15/180L (trade name); manufactured by IWASAKI ELECTRIC CO., LTD.) under the conditions of an accelerating voltage of 180 kV and a dose of 50 kGy. Then, the Teflon (registered trademark) sheet was peeled off to thereby obtain a polymer electrolyte membrane.

### (Example 3)

30 g of methacryloyloxyethyl acid phosphate (Phosmer M (trade name); available from Uni-Chemical Co., Ltd.), 4 g of a urethane acrylate prepolymer (UA-340P (trade name); number-average molecular weight: 13,000; available from Shin-Nakamura Chemical Co., Ltd.), and photopolymerization initiators (0.08 g of IRGACURE 651 (trade name) and 0.08 g of IRGACURE 184 (trade name); both available from Ciba Specialty Chemicals) were sufficiently mixed, to thereby prepare a polymerizable solution.

The polymerizable solution was applied onto a surface of a Teflon (registered trademark) sheet in a thickness of 50 µm. Then, light irradiation was effected at 1.4 J/cm² using a light irradiation apparatus (EX250-W (trade name); manufactured by HOYA-SCHOTT), and the Teflon (registered trademark) sheet was peeled off, to thereby obtain a polymer electrolyte membrane.

### (Example 4)

30 g of vinylphosphonic acid, 5 g of a urethane acrylate prepolymer (UA-6100 (trade name); number-average molecular weight: 2300; available from Shin-Nakamura Chemical Co., Ltd.), and photopolymerization initiators (0.09 g of IRGACURE 651 (trade name) and 0.09 g of IRGACURE 184 (trade name); both available from Ciba Specialty Chemicals) were sufficiently mixed, to thereby prepare a polymerizable solution.

The polymerizable solution was applied onto a surface of a Teflon (registered trademark) sheet in a thickness of 70 µm. Then, light irradiation was effected at 1.4 J/cm² using a light irradiation apparatus (EX250-W (trade name); manufactured by HOYA-SCHOTT), and the Teflon (registered trademark) sheet was peeled off, to thereby obtain a polymer electrolyte membrane.

### (Example 5)

A polymer electrolyte membrane was obtained by following the same procedure as in Example 4 with the exception that 30 g of vinylsulfonic acid was used instead of 30 g of vinylphosphonic acid.

### (Comparative Example 1)

A polymer electrolyte membrane was obtained by following the same procedure as in Example 1 with the exception that 5 g of an EO adduct diacrylate of bisphenol A (BP-10EA (trade name); number-average molecular weight: 936; available from KYOEISHA CHEMICAL Co., LTD.) was used instead of 5 g of the urethane acrylate prepolymer (UF-503LN (trade name); number-average molecular weight: 4,900; available from KYOEISHA CHEMICAL Co., LTD.).

### (Comparative Example 2)

A polymer electrolyte membrane was obtained by following the same procedure as in Example 2 with the exception that 3 g of a urethane acrylate prepolymer (UA-160TM (trade name); number-average molecular weight: 1600; available from Shin-Nakamura Chemical Co., Ltd.) was used instead of 3 g of the urethane acrylate prepolymer (UF-8001(trade name); number-average molecular weight: 3,200; available from KYOEISHA CHEMICAL Co., LTD.).

### (Comparative Example 3)

A polymer electrolyte membrane Nafion 112 (trade name; 50 µm thick) available from DuPont was used as such.

### [Evaluation]

### <Bending Test>

A 3 cm square test piece was cut out from each of the obtained polymer electrolyte membranes. In the state in which one side edge of the test piece was held, the test piece was folded by 180° along a center line such that one rectangular half fits onto the other rectangular half and was then returned to its original planar shape. After the folding/returning step was repeated 100 times, the surface state of the test piece was observed. The results are shown in Table 1.

### <Proton Conductivity>

A 3 cm × 2 cm test piece was cut out from each of the obtained polymer electrolyte membranes and fixed on platinum electrodes disposed at an interval of 1 cm. Then, the test piece was held in an environment of 50°C temperature and 95% relative humidity, and the proton conductivity was measured by use of an impedance analyzer (SI1260 (trade name); manufactured by Solartron). The results are shown in Table 1.

**Table 1**

| | Bending Test (after 100 times repetition) | Proton Conductivity (S/cm) |
|---|---|---|
| Example 1 | No change occurred | 5.5×10⁻² |
| Example 2 | No change occurred | 8.0×10⁻² |
| Example 3 | No change occurred | 6.5×10⁻³ |
| Example 4 | No change occurred | 2.6×10⁻³ |
| Example 5 | No change occurred | 9.0×10⁻² |
| Comparative Example 1 | Cracks generated at fold line | 5.8×10⁻³ |
| Comparative Example 2 | Clouding occurred at fold line | 7.8×10⁻³ |
| Comparative Example 3 | No change occurred | 8.2×10⁻² |

### <Fuel cell>

A platinum catalyst (TEC10E50E (trade name); available from Tanaka Kikinzoku Kogyo K.K.) for a fuel electrode, and a platinum/ruthenium catalyst (TEC61E54 (trade name); available from Tanaka Kikinzoku Kogyo K.K.) for an oxidizer electrode were each carried on a piece of carbon paper (TGP-H-060 (trade name); available from Toray Industries, Inc.) having a size of 5 cm × 5 cm and a thickness of 0.2 mm in an amount of 1.5 mg/cm².

A 7 cm square test piece was cut out from each of the polymer electrolyte membranes obtained in Examples 1 to 5 and Comparative Examples 1 to 3. The test piece of the polymer electrolyte membrane was sandwiched by the carbon paper pieces carrying the fuel electrode catalyst and the oxidizer electrode catalyst, and the whole was pressed under the conditions of a temperature of 120°C and a pressure of 8 MPa, to thereby make an assembly (MEA) of the polymer electrolyte membrane, the electrodes, and the catalysts. In the MEA production process, the polymer electrolyte membrane of Comparative Example 1 had cracks generated therein and thus could not be made into an MEA.

The obtained MEA was installed in a test cell of a direct methanol fuel cell (EFC25-01DM (trade name); manufactured by ElectroChem, Inc.). Then, while the temperature of the cell was maintained at 70°C, a 5% aqueous methanol solution as a fuel and oxygen as an oxidizer were supplied to the cell, so that a current-voltage curve was obtained.

Table 2 shows a terminal voltage in electrical discharge of each of the fuel cells at a current density of 0.17 A/cm².

**Table 2**

| | Terminal voltage (V) |
|---|---|
| Example 1 | 0.52 |
| Example 2 | 0.53 |
| Example 3 | 0.52 |
| Example 4 | 0.54 |
| Example 5 | 0.55 |
| Comparative Example 1 | No MEA produced |
| Comparative Example 2 | 0.53→0.40 |
| Comparative Example 3 | 0.39 |

It can be seen from the results of Table 2 that the polymer electrolyte membranes of Examples 1 to 5 each have good methanol-crossover suppressing characteristics, and thus each have a terminal voltage higher than that of the Nafion membrane of Comparative Example 3.

Further, because the polymer electrolyte membrane of Comparative Example 1 was hard and brittle, cracks generated in MEA production step, so that the membrane could not be incorporated into the cell. The polymer electrolyte membrane of Comparative Example 2 had a high terminal voltage (0.53 V) at an initial stage of power generation, but the voltage decreased (0.40 V) during continued power generation. It is presumed that the membrane could not follow the compression and swelling in the cell and generated cracks, thereby decreasing the voltage. As to the results of the bending test, the polymer electrolyte membranes having cracks or clouding generated at the fold line mean that those membranes could not be installed into the fuel cell or had poor electrical discharge performance.

The Nafion membrane of Comparative Example 3 had good proton conductivity but showed significant methanol crossover, and thus presumably had a low terminal voltage.

A polymer electrolyte membrane is provided which comprises a copolymer prepared by polymerization of a phosphorus-atom-containing unsaturated monomer comprising at least one phosphorus atom and at least one ethylenically unsaturated bond in a molecule, typically represented by the general formula (1): 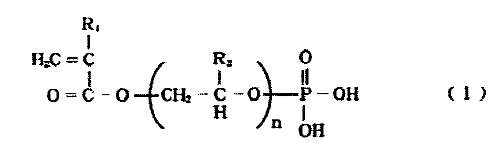 and a monomer or prepolymer of a number-average molecular weight of 2,000 or more having an ethylenically unsaturated bond. Thereby, there are provided a polymer electrolyte membrane having both the high proton conductivity of the polymer electrolyte membrane containing phosphoric acid ester and a high mechanical strength, and a polymer electrolyte fuel cell using the polymer electrolyte membrane.

## Claims

1. A polymer electrolyte membrane comprising a copolymer prepared by polymerization of a phosphorus-atom-containing unsaturated monomer comprising at least one phosphorus atom and at least one ethylenically unsaturated bond in a molecule, and a monomer or prepolymer of a number-average molecular weight of 2,000 or more having an ethylenically unsaturated bond.

2. The polymer electrolyte membrane according to claim 1, wherein the phosphorus-atom-containing unsaturated monomer comprising at least one phosphorus atom and at least one ethylenically unsaturated bond in a molecule is a compound represented by the general formula (1): 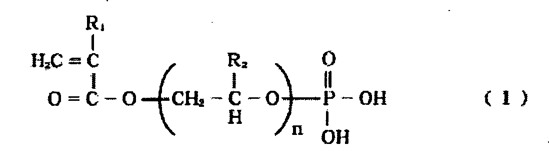
wherein R₁ represents a hydrogen atom or an alkyl group; R₂ represents a hydrogen atom or a substituted or unsubstituted alkyl group; and n represents an integer of 1 to 6.

3. The polymer electrolyte membrane according to claim 1, wherein the phosphorus-atom-containing unsaturated monomer comprising at least one phosphorus atom and at least one ethylenically unsaturated bond in a molecule is a compound represented by the general formula (2): 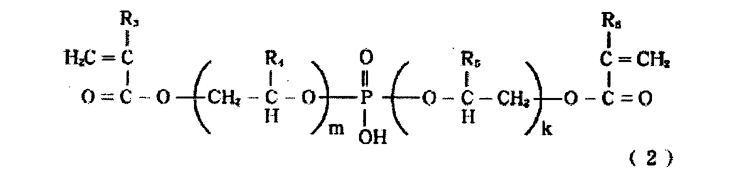
wherein R₃, R₄, R₅ and R₆ each independently represent a hydrogen atom or a substituted or unsubstituted alkyl group; and m and k each independently represent an integer of 1 to 6.

4. The polymer electrolyte membrane according to any one of claims 1 to 3, which is prepared by polymerization of 100 parts by weight of the phosphorus-atom-containing unsaturated monomer comprising at least one phosphorus atom and at least one ethylenically unsaturated bond in a molecule, and 3 to 40 parts by weight of the monomer or prepolymer of a number-average molecular weight of 2,000 or more having an ethylenically unsaturated bond.

5. A polymer electrolyte membrane prepared by polymerization of a monomer of a molecular weight of 2,000 or more comprising an acrylate moiety, an isocyanate moiety and a polyol moiety, and an unsaturated monomer having at least one ethylenically unsaturated bond and at least one sulfonic acid group, phosphoric acid group, or phosphonic acid group in a molecule.

6. A polymer electrolyte membrane comprising a polymer having a urethane bond and a polyol moiety in a main chain and a sulfonic acid group, phosphoric acid group, or phosphonic acid group in a side chain.

7. A polymer electrolyte fuel cell comprising the polymer electrolyte membrane set forth in any one of claims 1 to 6.
